**Europäisches Patentamt**

(19) **European Patent Office**

**Office européen des brevets**

(11) Veröffentlichungsnummer : **0 256 027 B1**

(12) # EUROPÄISCHE PATENTSCHRIFT

(45) Veröffentlichungstag der Patentschrift :
06.03.91 Patentblatt 91/10

(51) Int. Cl.$^5$ : **H04Q 11/04**

(21) Anmeldenummer : **87900058.6**

(22) Anmeldetag : **16.12.86**

(86) Internationale Anmeldenummer :
**PCT/DE86/00515**

(87) Internationale Veröffentlichungsnummer :
**WO 87/04035 02.07.87 Gazette 87/14**

(54) **VERFAHREN ZUM GLEICHZEITIGEN BETRIEB MEHRERER ENDGERÄTE AN EINER NETZABSCHLUSSEINHEIT EINES BREITBANDNETZES.**

(30) Priorität : **18.12.85 DE 3544797**

(43) Veröffentlichungstag der Anmeldung :
**24.02.88 Patentblatt 88/08**

(45) Bekanntmachung des Hinweises auf die Patenterteilung :
**06.03.91 Patentblatt 91/10**

(84) Benannte Vertragsstaaten :
**DE FR GB IT SE**

(56) Entgegenhaltungen :
**DE-A- 3 333 379**
**IEEE Transactions on Communications, vol COM-29, no 6, June 1981 (New York US) H Matt et al: "Integrated broad-band communication using optical networks-results of an experimental study" pages 868-885**
**Nachrichtentechnische Zeitschrift. vol 27, issue 1974 (Berlin DE) K Schenkel:"Ein integriertes 300 Mbits/s Zeitmultiplexnachrichtensystem mit dezentraler Vermittlung", pages 283-291**
**Proceedings of the 6th International Symposium on Subsrcibers Loops and Services, Nice (FR), 1-5 October 1984, T Ono et al: "A new multiple access bus interface with an active terminator for ISDN Applications" pages 147-151**

(73) Patentinhaber : **Philips Patentverwaltung GmbH**
**Wendenstrasse 35 Postfach 10 51 49**
**W-2000 Hamburg 1 (DE)**
**DE**
Patentinhaber : **N.V. Philips' Gloeilampenfabrieken**
**Groenewoudseweg 1**
**NL-5621 BA Eindhoven (NL)**
**FR GB IT SE**
Patentinhaber : **Siemens Aktiengesellschaft**
**Wittelsbacherplatz 2**
**W-8000 München 2 (DE)**
**DE FR GB IT SE**
Patentinhaber : **Standard Elektrik Lorenz Aktiengesellschaft**
**Lorenzstrasse 10**
**W-7000 Stuttgart 40 (DE)**
**DE FR GB IT SE**

(72) Erfinder : **DÖRING, Karlheinz**
**August-Bebel-Strasse 15**
**W-6100 Darmstadt (DE)**
Erfinder : **GRIMM, Karl, Josef**
**Altheimer Strasse 20**
**W-6125 Münster (DE)**
Erfinder : **BERTELSMEIER, Manfred**
**Hobrechtstrasse 12**
**W-6100 Darmstadt (DE)**

(74) Vertreter : **Fuchs, Franz-Josef, Dr.-Ing.**
**Postfach 22 13 17**
**W-8000 München 22 (DE)**

## Beschreibung

Die Erfindung betrifft ein Verfahren nach dem Gattungsbegriff des Patentanspruchs 1.

Aus der deutschen Offenlegungsschrift DE 33 33 379 Al ist ein Verfahren zur Einstellung von Kanaleinfügungszeitsteuerungen in einem Informations-Kommunikations system bekannt, welches eine Anzahl von Endeinrichtungen, eine Netzwerkabschlußeinheit, eine R-Leitung und eine T-Leitung umfaßt. Die Endeinrichtungen sind gemeinsam mit der R- und der T-Leitung verbunden, um mit der Netzwerkabschlußeinheit zu kommunizieren. Die Kommunikation wird in Form aufeinanderfolgender Rahmensignale erzielt, welche jeweils aus wenigstens zwei aufeinanderfolgenden Kanälen bestehen. Jede Endeinrichtung bestimmt eine Zeitverzögerung, welche auf die Kanaleinfügung in das Rahmensignal auf der T-Leitung ausgeübt werden soll. Die Verzögerungszeit wird durch die Durchführung eines Lern Identifizierungsalgorythmus bestimmt, in dem die Transmissionsverzögerungszeit längs der R- und der T-Leitungen berücksichtigt wird.

Ein Verfahren der einleitend beschriebenen Art ist – allerdings nur für Bitraten unter ca. 200 kbit/s – für die sogenannte ISDN–$S_0$– oder S/T-Schnittstelle für den ISDN-Basisanschluß eines diensteintegrierten digitalen Fernmeldenetzes bekannt (Fernmeldepraxis, Heft 19/20, 1985, S. 759-762).

Die Erfindung hat die Aufgabe, ein solches Verfahren so zu erweitern, daß es bis zu Bitraten von 140 Mbit/s unter Beibehaltung seiner Leistungsmerkmale, insbesondere der noch zu erläuternden D-Kanal-Zugriffssteuerung, einsetzbar ist.

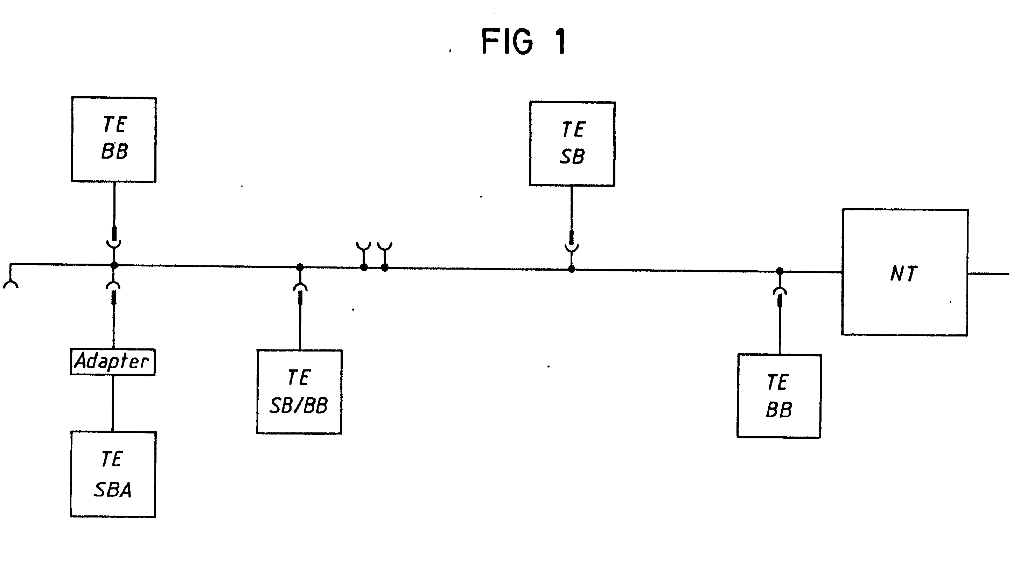

Die Fig. 1 verdeutlicht die Aufgabenstellung. Der in der Fig. 1 nur schematisch dargestellte passive Bus mit z. B. 8 Endgerätesteckdosen und der Netzabschlußeinheit (NT) als Schnittstelle zum ISDN soll durch die Erfindung so erweitert und umgestaltet werden, daß der anstelle von Bitraten unter 200 kbit/s solche von ca. 140 Mbit/s, also eine um das etwa 700 fache höhere Datengeschwindigkeit, verarbeiten kann. Dabei sollen neben der D-Kanal-Zugriffssteuerung und den bei der Schmalbandausführung möglichen Leitungslängen für Bus und Zuleitungen auch einheitliche Endgerätesteckdosen sowohl für die bisherigen ISDN-Schmalbanddienste als auch für die neu hinzukommenden Breitbanddienste vorgesehen werden. In der Fig. 1 sind die verschiedenen möglichen Anschlüsse verdeutlicht, nämlich :
Endgeräte für Schmalbanddienste (TE SB)
Endgeräte für Breitbanddienste (TE BB)
Endgeräte für Schmal- und Breitbanddienste (TE SB/BB)
als auch für Endgeräte bisheriger Bauart für Schmalbanddienste (TE SBA), die über einen besonderen Adapter angeschlossen werden sollen.

Um den in Fig. 1 dargestellten Soll-Zustand zu erreichen, ergeben sich mehrere, durch die wesentlich höhere Bitrate bedingte Probleme, die bei den bisherigen Schnittstellen nicht auftreten. Die Eigenschaften der bekannten $S_0$-Schnittstelle werden im folgenden kurz abgehandelt.

Über die $S_0$-Schnittstelle werden 2 unabhängige, transparente B-Kanäle (Nutzkanäle) mit einer Geschwindigkeit von jeweils 64 kbit/s gemäß CCITT-Empfehlung I.412 und ein D-Kanal (Signalisierungskanal) mit einer Geschwindigkeit von 16 kbit/s in beiden Richtungen zur Verfügung gestellt.

Die genannten Kanäle und weitere Funktionen werden zu einem digitalen Multiplex-Signal zusammengefaßt.

Der Multiplexrahmen ist 48 bit lang und dauert 250 µs. Es können mehrere Endgeräte gleichzeitig auf den D-Kanal zugreifen, während jeder B-Kanal nur von einem Endgerät belegt werden kann. Für den Zugriff auf den D-Kanal wurde eine Prozedur gewählt, die sicherstellt, daß selbst bei gleichzeitigem Zugriff zweier oder mehrerer Endgeräte zum D-Kanal immer ein Endgerät seine Information erfolgreich übertragen kann (D-Kanal-Zugriffssteuerung). Wenn keine Information im D-Kanal zu übertragen ist, wird Dauerzustand binäre 1 übertragen (Ruhezustand).

Für die D-Kanal-Zugriffssteuerung wird ein D-Echo-Kanal mit 16 kbit/s von der Netzabschlußeinheit in Richtung zum Endgerät benutzt. Bei Erhalt eines Bits vom Endgerät auf dem D-Kanal soll die Netzabschlußeinheit diesen Zustand mit dem nächsten D-Echo-Kanal-Bit zum Endgerät reflektieren. Jedes Endgerät im aktiven Zustand soll den D-Echo-Kanal beobachten. Es darf erst dann auf den D-Kanal zugreifen, wenn es durch Zählen der aufeinanderfolgenden Zustände binäre 1 auf dem D-Echo-Kanal festgestellt hat, daß kein anderes Endgerät den D-Kanal belegt hat. Während der D-Kanal belegt ist, können höchstens 6 Zustände binäre 1 aufeinanderfolgen. Eine größere Anzahl aufeinanderfolgender Zustände binäre 1 bedeutet, daß der D-Kanal frei ist. Wenn gleichzeitig zwei oder mehrere Endgeräte Information auf dem D-Kanal übertragen, so überlagern sich die Impulse auf der Leitung. Solange die Endgeräte gleiche Impulse übertragen, empfängt die Netzabschlußeinheit die Information so, als käme sie von nur einer Quelle. Bei abweichenden gesendeten Impulsen entsteht durch Überlagerung auf der Leitung ein negativer Impuls, denn durch Ausgleichsbits im Multiplexrahmen wird dfür gesorgt, daß die Bits im D-Kanal nur mit Signalpegel 0 oder mit

2

negativem Signalpegel übertragen werden. Der Impuls wird von der Netzabschlußeinheit erkannt und auf dem D-Echo-Kanal reflektiert. Während der Informationsübertragung im D-Kanal muß das Endgerät den empfangenen D-Echo-Kanal beobachten und das jeweils letzte gesendete Bit mit dem nächsten verfügbaren D-Echo-Bit vergleichen. Wenn diese beiden Bits übereinstimmen, darf das Endgerät die Übertragung fortsetzen. Im anderen Fall muß das Endgerät sofort die Übertragung abbrechen und in den Beobachtungszustand zurückkehren. Bei gleichzeitigem Zugriff zweier oder mehrerer Endgeräte auf den D-Kanal scheidet jeweils dasjenige Endgerät aus, das binär 1 sendet, während ein anderes binär 0 sendet.

Bei dem oben beschriebenen ISDN-Pilotprojekt werden nur wenige Schmalbanddienste mit Bitraten von 64 kbit/s im Zeitmultiplexverfahren übertragen, so daß dieses Projekt auch kurz als Schmalband-ISDN bezeichnet wird. Die Bitdauer im Multiplexrahmen beträgt 5,2 µs. In dieser relativ großen Zeit kommen Störungen durch Intersymbolinterferenz (Veränderung der Impulsform durch Vorläufer bzw. Nachschwinger benachbarter Impulse) nicht zum Zuge, da für die Entscheidung am Empfänger in Bitmitte diese Störungen längst abgeklungen sind. Weder das frequenzabhängige Dämpfungsmaß noch die frequenzabhängige Gruppenlaufzeit des Übertragungsmediums wirken sich wegen der geringen Länge des Busses nennenswert auf die Impulsform aus, da die Laufzeit auf dem Bus wesentlich kleiner ist als die Dauer eines Bits. Aus dem gleichen Grunde sind zeitliche Verschiebungen der Bits innerhalb gewisser Grenzen für die Bitüberlagerung auf dem D-Kanal unkritisch.

Sollen nun ISDN-Schmalbanddienste zusammen mit Breitbanddiensten (z.B. Bildfernsprechen mit 135 Mbit/s) in einem gemeinsamen Zeitmultiplexrahmen übertragen werden (Breitband-ISDN ISDN-B), so ist ein passiver Bus in gleicher Form wie beim Schmalband-ISDN nicht mehr möglich.

Bei einer Bitdauer in der Größenordnung von 10 ns (entsprechend 140 Mbit/s) treten folgende Störungen auf :

a) Laufzeitdifferenz :

Die Signallaufzeit zwischen dem Endgerät mit der größten und dem mit der geringsten Entfernung zur Netzabschlußeinheit kann erheblich größer als 1/2 Bitdauer sein. Dieser Laufzeitunterschied wird in beiden Übertragungsrichtungen wirksam, so daß er an der Netzabschlußeinheit doppelt so groß ist. Die von verschieden weit von der Netzabschlußeinheit entfernten Endgeräten gesendeten Multiplexrahmen können um mehr als ein Bit zeitlich gegeneinander verschoben an der Netzabschlußeinheit eintreffen. Dann kann ein an der Netzabschlußeinheit eintreffender Impuls keiner Bitposition im Rahmen mehr eindeutig zugeordnet werden.

b) Intersymbolinterferenz (ISI) :

Infolge der frequenzabhängigen linearen Verzerrungen des Übertragungsmediums können zu den Impulsschwerpunkten Vorläufer und Nachschwinger entstehen, die bis in die Schwerpunkte der Nachbarimpulse reichen und dort falsche Signale vortäuschen können. Eine vollständige Beseitigung der Vorläufer und Nachschwinger ist nur für eine feste Länge des Übertragungsmediums möglich. Die Impulsformung kann so vorgenommen werden, daß eine amplitudenmäßige Impulserkennung auch bei abweichenden Längen noch möglich ist.

c) Phasenverschiebung der Impulsschwerpunkte wegen frequenzabhängiger Gruppenlaufzeit :

Infolge der frequenzabhängigen Gruppenlaufzeit des Übertragungsmediums haben die von veschieden weit entfernten Sendern eintreffenden Impulsschwerpunkte an der Netzabschlußeinheit verschiedene Phasenlagen. Der Takt im Empfänger der Netzabschlußeinheit darf daher nicht phasenstarr sein, sondern muß sich auf wechselnde Phasenlagen einstellen können (Taktphasenabgleich).

d) Störende Überlagerung von Impulsen gleichzeitig aktiver Quellen :

Im D-Kanal können mehrere Sender gleichzeitig aktiv sein, aber der Empfänger in der Netzabschlußeinheit kann sich nicht gleichzeitig auf mehrere Phasenlagen einstellen. Außerdem führt die spannungsmäßige Überlagerung von bereits verzerrten Impulsen der Bitdauer von etwa 10 ns zu einer noch stärkeren Deformierung des resultierenden Impulses, so daß eine fehlerfreie Dedektion bei der hohen Bitrate unmöglich wird.

Abgesehen von der Intersymbolinterferenz, für die eine gesonderte Lösung vorgeschlagen wird, werden die vorstehend aufgeführten Störmöglichkeiten a, c und d durch die im Patentanspruch 1 angegebene Merkmalskombination und damit die Aufgabe der Erfindung gelöst. Vorteilhafte Weiterbildungen sind in den Patentansprüchen 2-7 angegeben.

Vorteile

Durch die in einer Übertragungsrichtung ringförmige Busstruktur werden die Laufzeitdifferenzen ausgeglichen. Die Abschnittssynchronisierung erlaubt eine sichere Synchronisation von nacheinander von verschiedenen Quellen eintreffenden Signalen auch verschiedener Codierung. Durch eine wesentliche Vergrößerung der Bitdauer und AMI-ähnliche Codierung des D-Kanal-Bits in gehender Richtung ist eine eindeutige Erkennung von überlagerten Signalen aus gleichzeitig aktiven Quellen möglich.

Alle Maßnahmen zusammen erlauben die Beibehaltung der D-Kanal-Zugriffssteuerung trotz der um das ca. 700 fache erhöhten Bitrate und den Einsatz von einheitlichen Endgerätesteckdosen für Schmalband- und Breitbanddienste in einem Breitbandnetz (ISDN-B). Für die vom CCITT standardisierte Übertragungsbitrate von 139,264 Mbit/s sind bereits Übertragungseinrichtungen verfügbar.

Im folgenden wird die Erfindung anhand von 9 Figuren näher erläutert. Es zeigen :

Fig. 1 die bereits erläuterte Aufgabenstellung

Fig. 2 die grundsätzliche Struktur eines breitbandigen passiven Bussystems nach der Erfindung

Fig. 3 die Wirkungsweise der Abschnittssynchronisation anhand eines Impulsdiagramms

Fig. 4 ein Impulsdiagramm, welches die Überlagerung von AMI-codierten Impulsen bei gleichzeitigem Zugriff mehrerer Sender auf dem D-Kanal verdeutlicht

Fig. 5 ein Blockschaltbild des Empfängers (4) der Netzabschlußeinheit (NT) der Fig. 2

Fig. 6 die Struktur des Multiplexrahmens für beide Übertragungsrichtungen

Fig. 7 den zeitlichen Versatz des gehenden gegenüber dem kommenden Überrahmen

Fig. 8a den Anschluß eines bisherigen Schmalband-ISDN-Endgerätes an den Breitbandbus

Fig. 8b ein Zeitdiagramm für E- bzw. D-Bits auf den in Fig. 8a gezeigten Streckenabschnitten.

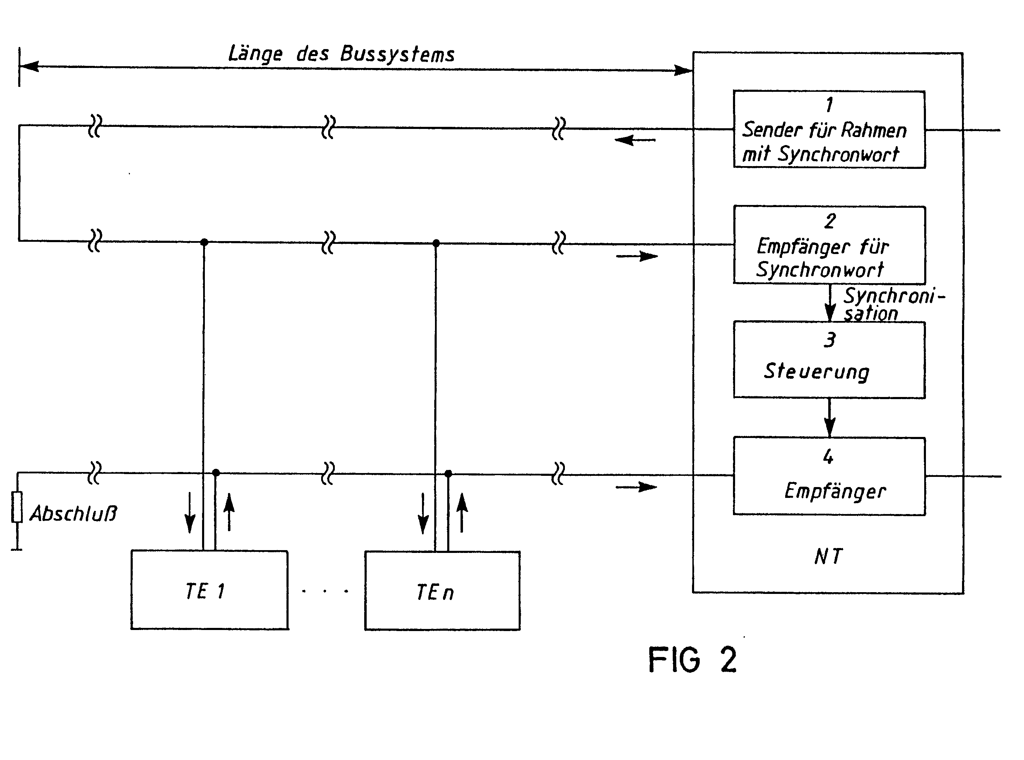

Fig. 2 zeigt die Struktur des breitbandigen passiven Bussystems sowie die Funktionen der Netzabschlußeinheit (NT). Das Bussystem besteht aus drei parallel verlaufenden Leitungen, von denen die oberen zwei am Ende so zusammengeschaltet sind, daß eine Schleife entsteht. Die dritte Leitung ist am Ende reflexionsarm abgeschlossen.

Der Sender (1) in der Netzabschlußeinheit (NT) sendet Multiplexrahmen mit Synchronwort auf der Schleife zu allen angeschlossenen Empfängern der Teilnehmerendgeräte (TE1 bis TEn), die außerdem jeweils einen gesteuerten Sender enthalten. Die Empfänger sind an der rückführenden Leitung der Schleife angeschlossen und empfangen das über die Schleife zum Busende geführte Signal. Die Sender der Teilnehmerendgeräte (TE1 bis TEn) senden ihr Signal auf dem direkten Weg über die dritte Leitung zur Netzabschlußeinheit (NT). Außer einer Entkopplung der Übertragungsrichtungen erreicht man damit, daß die Summe der Signallaufzeiten von der Netzabschlußeinheit (NT) zu den Empfängern der Teilnehmerendgeräte (TE) und von den Sendern der Teilnehmerendgeräte (TE) zur Netzabschlußeinheit (NT) unabhängig von der jeweiligen Entfernung zwischen Netzabschlußeinheit (NT) und Teilnehmerendgeäte (TE) für alle Teilnehmerendgeräte gleich ist.

Sowohl die Teilnehmerendgeräte (TE1 bis TEn) als auch der Empfänger (4) in der Netzabschlußeinheit (NT) werden auf den Sender (1) synchronisiert. Am Schleifenende ist in der Netzabschlußeinheit (NT) ein besonderer Empfänger (2) für das Synchronwort angeschlossen. Dieser synchronisiert über eine Steuerung (3) den zeitlichen Ablauf im Empfänger (4) für die Signale der Teilnehmerendgeräte (TE).

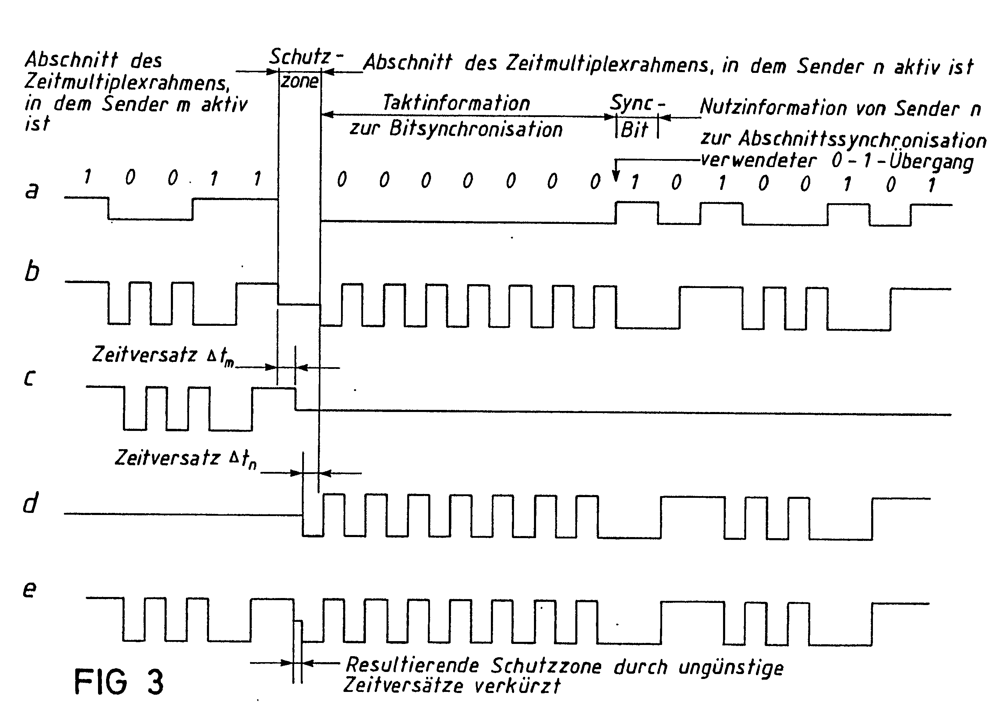

Das Impulsdiagramm der Fig. 3 enthält im linken Teil einen Abschnitt des Zeitmultiplexrahmens, in dem der Sender m aktiv ist und im rechten Teil einen Abschnitt, in dem der Sender n aktiv ist. An der Grenze zwischen zwei Zeitabschnitten, in denen verschiedene Quellen aktiv sind, entsteht am Empfänger der Netzabschlußeinheit im allgemeinen ein Phasensprung. Um dem Empfänger Zeit zu geben, sich auf die neue Phasenlage einzustellen, wird zwischen den Abschnitten zusätzlich ein Zeitraum eingefügt (Vorspann), der keine Nutzinformation enthält. Der Vorspann besteht aus zwei Teilen. Der erste Teil wird durch ein Taktbitmuster mit viel Taktinformation, d.h. mit vielen Flankenwechseln der Impulse, gebildet. Dadurch wird der Taktgenerator für den Empfänger auf die neue Phasenlage eingestellt (Taktphasenabgleich).

Mit dem Übertragungscode (Anzahl der Flankenwechsel pro Bit) und der Güte des Taktoszillators ist die Länge des Bitmusters festgelegt. Allgemein gilt : Je größer die Güte des Oszillators ist, umso mehr Bits braucht er, um sich auf die neue Phasenlage einzustellen.

Der zweite Teil des Vorspanns wird durch ein Synchronisierbitmuster gebildet, woraus der Beginn des folgenden Zeitabschnitts für die Nutzinformation im Multiplexrahmen markiert wird (Abschnittssynchronisation). Es muß sich klar vom Taktbitmuster unterscheiden, so daß die Grenze zwischen beiden Bitmustern sofort zu erkennen ist. Diese Grenze wird als Bezugspunkt für die Abschnittssynchronisation verwendet. Die Länge des Synchronisierbitmusters richtet sich nach dem verwendeten Übertragungscode. Bei CMI- Codierung kann z.B. das Taktbitmuster aus einer Nullfolge bestehen. Als Synchronisierbitmuster genügt dann bereits ein einziges Bit mit binär 1 (s. Fig. 3). Der 0-1-Übergang bewirkt die Abschnittssynchronisation. Nach dem Taktphasenabgleich braucht also nur auf die der Nullfolge folgende erste logische 1 geprüft werden, um den Beginn des informationsenthaltenden Zeitabschnitts festzustellen. Weiter geht aus Fig. 3 hervor, daß zwischen den beiden Abschnitten des Zeitmultiplexrahmens, in denen die Sender m und n aktiv sind, eine Schutzzone eingeräumt ist, um die Zeitversätze der am Empfänger eintreffenden Signale abzufangen.

Das Impulsdiagramm der Fig. 3 zeigt in der ersten Zeile a ein Beispiel für eine zu übertragende Bitfolge. Die Zeile b zeigt ein CMI-Signal beider Sender am Empfänger im Idealfall, ohne Zeitversatz. Die Zeile c

zeigt das am Empfänger eintreffende Signal des Senders m mit einem Zeitversatz $\Delta$tm.

Die Zeile d zeigt das am Empfänger eintreffende Signal des Senders n mit einem Zeitversatz $\Delta$tn. Die Zeile e zeigt schließlich das CMI-Signal beider Sender, wie es im nicht idealen Fall am Empfänger eintrifft. Man erkennt, daß die Schutzzone durch ungünstige Zeitversätze wesentlich verkürzt werden kann.

Neben der notwendigen Abschnittssynchronisation gibt es die eigentliche Rahmen-Synchronisierung, die so erfolgt, daß die Netzabschlußeinheit ein Synchronwort als Rahmenbeginnzeichen sendet und über den Ringbus wieder empfängt. Damit stellt sich die Netzabschlußeinheit auf die jeweilige Signallaufzeit auf dem Bus ein.

Hinzu kommen noch die Laufzeit auf den Endgeräteanschluß schnüren und die Antwortzeiten des Endgerätes, deren Summe jedoch für alle Endgeräte gleich sein muß. Das Verhältnis von informationslosen zu informationstragenden Zeiten muß so klein gehalten werden, daß die dadurch bedingte Erhöhung der Übertragungsbitrate akzeptabel bleibt.

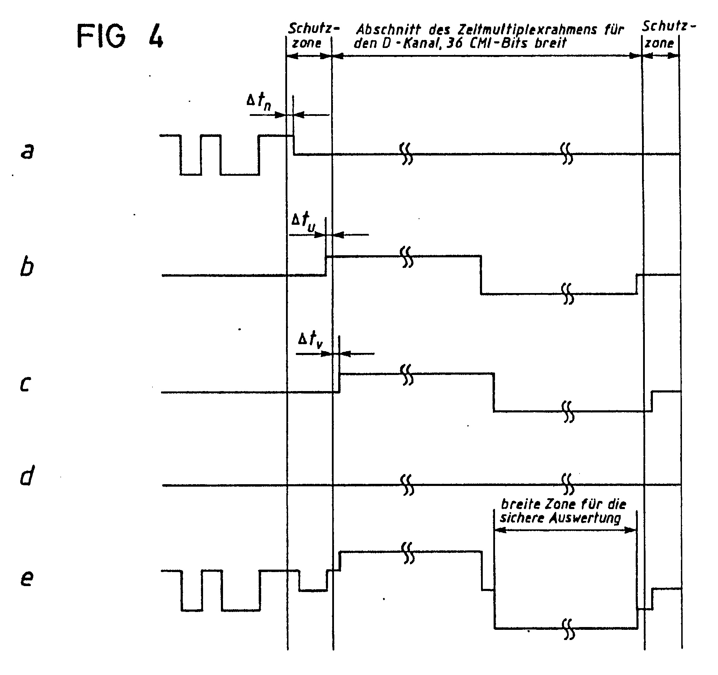

In bestimmten Bitpositionen des Multiplexrahmens dürfen mehrere räumlich getrennte Sender gleichzeitig aktiv sein (z.B. D-Kanal-Bits). Die Impulse aus diesen Sendern überlagern sich an der Netzabschlußeinheit zu einem Gesamtimpuls. Wegen der unterschiedlichen Phasenlage der eintreffenden Impulse und wegen unterschiedlicher längenabhängiger Amplitudenverzerrungen kann der Gesamtimpuls nicht mehr immer fehlerfrei erkannt werden. Durch eine kurzzeitige Vergrößerung der Bitdauer von Größenordnung 10 ns auf Größenordnung 100 ns wird erreicht, daß die Bereiche der Entscheidungsunsicherheit auf die Bitgrenzen beschränkt bleiben und in Bitmitte eine Entscheidung möglich ist. Diese Vergrößerung der Bitdauer bedeutet eine Verringerung der augenblicklichen Übertragungsbitrate, d.h. der Multiplexrahmen enthält Bereiche verschiedener Bitraten. Vor der Bitverbreiterung ist ein Einfügen eines informationslosen Zeitabschnitts (Vorspann) nicht notwendig, da der Zeitpunkt für die Bitentscheidung hinreichend genau festliegt und zeitliche Schwankungen wegen der relativ großen Bitbreite unwirksam sind. Für die Bereiche verschiedener Bitraten können auch verschiedene Übertragunscodes gewählt werden, die den jeweiligen Bereichen optimal angepaßt sind. Somit werden innerhalb eines Multiplexrahmens gegebenenfalls auch verschiedene Übertragungscodes verwendet. Fig. 4 zeigt ein Beispiel der Bitverbreiterung, wie sie hier für den D-Kanal vorgeschlagen wird. Das Impulsdiagramm der Fig. 4 zeigt die Überlagerung der am Empfänger (4) der Fig. 2 anstehenden Spannungsimpulse für den D-Kanal für den Fall, daß mehrere Sender gleichzeitig signalisieren.

Die Zeile a zeigt zunächst das CMI-Signal des Senders m, der im Zeitabschnitt vor dem D-Bit aktiv ist. Dann folgt wie in Fig. 3 die Schutzzone. Der nachfolgende 36 CMI-Bits breite Abschnitt des Zeitmultiplexrahmens ist dem D-Kanal-Signalisierungsbit vorbehalten.

In diesem Zeitraum werden gemäß Zeile b 2 bit im modifizierten AMI-Code gelegt. Die Zeile b zeigt das AMI-Signal eines Senders u, der im D-Kanal sendet, welches mit einem voreilenden Zeitversatz $\Delta$tu gegenüber der Ideallage ($\Delta$tu = 0) eintrifft.

Die Zeile c zeigt das AMI-Signal eines weiteren Senders v, der ebenfalls auf den D-Kanal zugreift und mit einem nacheilenden Zeitversatz $\Delta$tv eintrifft.

Hat ein Endgerät im D-Kanal nichts oder binär 1 zu signalisieren, so bleibt der Signalpegel 0, wie die Zeile d ausweist. Die Übertragung von AMI-Bits im D-Kanal erfolgt mit der gleichstromfreien Folge + 1– 1 oder 00.

Das sich durch Überlagerung der Signale aller Sender ergebende Summensignal ist in Zeile e dargestellt. Die Auswertung kann bei diesem Signal z.B. in der Mitte des negativen Bits erfolgen, wie in Zeile e dargestellt.

Bei einer Übertragungsbitrate von beispielsweise 140 Mbit/s ergibt sich für den Zeitabschnitt der Bitverbreiterung eine momentane Übertragungsrate von 140 Mbit/s / (36/2) $\approx$ 7,8 Mbit/s, was einer Grundfrequenz von 3,9 MHz entspricht. Bei dieser relativ niedrigen Frequenz lassen sich AMI-Signale auf rund 100 m langen Koaxialkabeln als Übertragungsmedium für die Spannungsüberlagerung verwenden.

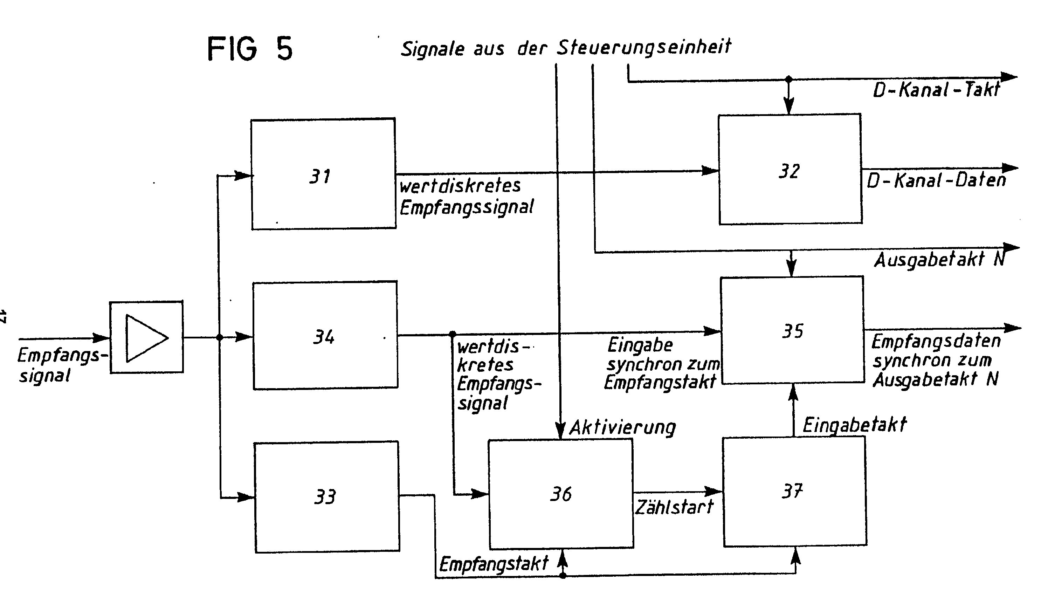

Fig. 5 zeigt die Funktionsblöcke des in Fig. 2 dargestellten Empfängers (4) in der Netzabschlußeinheit (NT) für Signale verschiedener Sender unterschiedlicher Momentanbitraten. Die in Fig. 2 gezeigte Empfängersteuerung (3) sorgt für eine Rahmensynchronisierung des Empfängers (4). Sie arbeitet hinreichend genau, um die einzelnen Zeitabschnitte im Bereich des geöffneten Auges abzutasten. Das verstärkte Empfangssignal gelangt einmal über einen Ternärentscheider (31) zum Register (32) für ein D-Kanal-Bit, wo zum richtigen, von der Steuerungseinheit angegebenen Zeitpunkt das D-Kanal-Bit eingetaktet wird. Außer den Signalen mit niedriger Momentanbitrate muß der Empfänger auch die binär codierten Signale hoher Bitrate von verschiedenen Sendern empfangen. Dazu muß sich der Empfänger auf die jeweilige Phasenlage zu Beginn eines jeden Zeitabschnittes neu einstellen. Zu diesem Zweck wird das Empfangssignal einem nachziehbaren Empfangstaktgeber (33), der sich an die jeweilige Phasenlage anpaßt, und einem Binärentscheider (34) (Schwellwertdetektor) zugeführt. Der Binärentscheider gibt ein Binärsignal ab, das

EP 0 256 027 B1

zu einem variablen Pufferspeicher (35) und zu einer Synchronmustererkennung (36) geführt wird, die für die Abschnittssynchronisierung sorgt.

Zu einem Zeitpunkt, zu dem durch den Vorspann der Takt schon in die richtige Phasenlage eingerastet sein muß, aktiviert die Empfängersteuereinheit die Synchronmustererkennungsschaltung (36). Diese sucht im Empfangsdatenstrom nach dem Bitmuster für die Abschnittssynchronisierung. Sobald sie es findet, startet sie den nachfolgenden Zähler (37) und deaktiviert sich selbst.

Der Zähler (37) zählt im wertdiskreten Empfangssignal m Bits ab, wobei m die Anzahl der Nutzbits im jeweiligen Zeitabschnitt des Multiplexrahmens ist.

Im Zähltakt werden die empfangenen Bits in einen Pufferspeicher (35) variabler Größe gebracht. Mit einem von der Steuerungseinheit erzeugten Takt wird der Pufferspeicher (35) ausgelesen. Der Ausgabetakt ist somit frei von den Phasenänderungen des Empfangstaktes.

Im speziellen Fall der Breitband-Schnittstelle (SBB) müssen im Zeitmultiplex folgende Bitströme zusammengefaßt werden :

16 kbit/s für den D-Kanal in beiden Richtungen für die Signalisierung,

16 kbit/s für den D-Echo-Kanal von der Netzabschlußeinheit in Richtung Endgerät für das D-Kanal-Zugriffsverfahren,

64 kbit/s für den B1-Kanal in beiden Richtungen für die Nutzinformation,

64 kbit/s für den B2-Kanal in beiden Richtungen für die Nutzinformation,

Bitstrom für die Aktivierung/Deaktivierung der Endgeräte von der Netzabschlußeinheit in Richtung Endgeräte,

135 Mbit/s für den Breitbandkanal in beiden Richtungen für die Bewegtbildübertragung (Bildfernsprechen BiFe),

Bitströme für Bild- und Zeilensynchronisation und eventuell Ton in beiden Richtungen.

Es ist bereits bekannt, dafür die Standardbitrate der 4. Stufe der PCM-Hierarchie von 139,264 Mbit/s zu verwenden, die auf der Basis von 2,048 Mbit/s-Systemen aufgebaut ist. Bei einem Bitratenbedarf für die Bewegtbildübertragung von ca.135 Mbit/s bleibt noch hinreichend Platz für 2 Schmalbandkanäle und die notwendige Steuerung und Synchronisierung (NTZ 38(1985), H.3, S. 143). Die Erfindung verwendet ebenfalls diese Standardbitrate. Da sie ein Vielfaches von 64 kbit/s ist, kann durch die nachstehend beschriebene Multiplexrahmenstruktur ein Stopfen sowohl in den Schmalbandkanälen als auch insbesondere im D-Signalisierungskanal vermieden werden.

Es stellt sich nun die Frage nach der Wiederholfrequenz des Multiplexrahmens. Nach Möglichkeit sollen pro Rahmen nur 1 D-Bit wegen der D-Kanal-zugriffssteuerung und demnach auch nur 1 D-Echo-Bit enthalten sein. Gleichzeitig ist es wünschenswert, pro Rahmen eine vollständige Bildzeile zu übertragen. Unter diesen Aspekten kommt man auf eine Rahmenwiederholfrequenz von 16 kHz. Damit liegt auch die Anzahl der Bits für die beiden B-Kanäle mit je 4 bit fest (= 1/2 PCM-Abtastwert). Will man jedoch für die B-Kanäle eine wortweise Übertragung haben, so wird ein Überrahmen mit der Wiederholfrequenz von 8 kHz gebildet, der 2 Rahmen enthält, die sich dadurch unterscheiden, daß der 1. Rahmen das Synchronisierwort und der 2. Rahmen das Meldewort enthält. Die Übertragung der B-Kanäle erfolgt dann alternierend, im ersten Rahmen beispielsweise B1 mit 8 bit (= voller PCM-Abtastwert) und im äquidistanten Rhythmus im zweiten Rahmen B2 ebenfalls mit 8 bit.

Die für die Übertragung eines Vollbildes zur Verfügung stehende Zeit ergibt sich aus der Bildfrequenz von 25 Hz zu 40 ms. Während dieser Zeit werden bei einer Multiplexrahmenwiederholfrequenz von 16 kHz 640 Multiplexrahmen übertragen. Hiervon enthalten 625 Rahmen je eine Bildzeile, die restlichen 15 Rahmen sind frei für zukünftige Verwendungszwecke. Das entspricht einer freien Übertragungskapazität von 8640 bit × 15 Rahmen × 16 kHz/640 Rahmen = 3,24 Mbit/s. Werden alle Zeilen eines Halbbildes in aufeinanderfolgenden Zeitmultiplexrahmen und die Halbbilder äquidistant übertragen, so kann bei Verwendung eines modernen Fernsehgerätes, das sich der jeweiligen Zeilenfrequenz anpaßt, ein Bild- bzw. Zeilenspeicher überflüssig werden.

Die Signalcodierung auf dem Bus erfolgt im CMI-Code (coded mark inversion : Der Binärwert 1 wird abwechselnd durch einen positiven und einen negativen Zustand dargestellt und der Binärwert 0, unbhängig vom vorhergegangenen Bit, durch einen negativen Zustand in der ersten Hälfte und einen positiven in der zweiten Hälfte des Bitintervalls). Nur in der Richtung vom Teilnehmerendgerät zur Netzabschlußeinheit wird in dem Zeitabschnitt für das D-Kanal-Bit zum Zwecke der Impulsüberlagerung die CMI-Codierung verlassen und auf AMI-Code mit möglichst großer Bitdauer umgeschaltet.

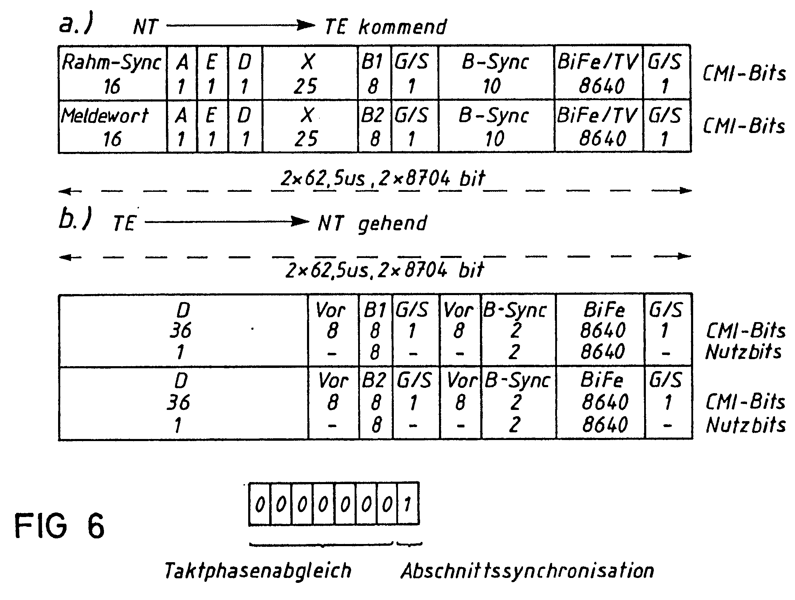

Die Struktur des Zeitmultiplexrahmens für beide Übertragungsrichtungen zeigt Fig. 6. Dabei sind die Zeitabschnitte eines jeden Kanals im Multiplexüberrahmen äquidistant angeordnet. Die Multiplexrahmen bzw. Überrahmen sind für beide Übertragungsrichtungen gleich lang.

Die einzelnen Zeitabschnitte des Multiplexrahmens bedeuten :

6

EP 0 256 027 B1

Richtung Netzabschlußeinheit → Endgeräte kommend :

## Rahmensynchronisiertwort (Rahm-Sync)

Das Rahmensynchronisierwort wird nur von der Netzabschlußeinheit zu den Endgeräten gesendet und kennzeichnet den Beginn des ersten Rahmens im Überrahmen. Es enthält 16 bit, wodurch eine hinreichend kleine Wahrscheinlichkeit gegeben ist, daß es beim Aufsynchronisieren im Überrahmen an anderer Stelle erneut vorkommt. Nachdem die Endgeräte das Synchronisierwort erkannt haben, müssen sie es erst nach einer vollen Länge des Überrahmens nieder prüfen. Für das Synchronisierwort ist jedes in sich gleichstromfreie Bitmuster zugelassen, z.B. die Bitfolge 00101110 10011010. Die Folgefrequenz ist 8 kHz.

## Meldewort

Der 2. Rahmen im Überrahmen von der Netzabschlußeinheit in Richtung Endgetäte enthält an der Stelle des Rahmensynchronisierwortes ein 16 bit langes Meldewort, das sich zumindest in einem Bit vom Rahmensynchronisierwort unterscheidet. Damit steht fest, welcher Rahmen des Überrahmens gerade gesendet wird und welcher B-Kanal an der Reihe ist. Die Folgefrequenz ist 8 kHz.

## Aktivierungsbit (A)

Das A-Bit zeigt den Endgeräten an, ob die Verbindung zwischen der Netzabschlußeinheit und den Endgeräten ordnungsgemäß aufgebaut, d.h. die Schicht 1 gemäß OSI-Referenzmodell der ISO als betriebsbereit anzusehen ist wie beim Schmalband-ISDN (Harold C. Folts : McGraw-Hill's Compilation of DATA COMMUNICATIONS STANDARDS, Edition II, (1982), Part 2, S. 521-532). Das A-Bit wird nur von der Netzabschlußeinheit in Richtung Endgeräte übertragen. Die Folgefrequenz ist 8 kHz.

## D-Echo-Kanal (E)

Für die D-Kanal-Zugriffssteuerung wird ein Bit benötigt, das das in der Netzabschlußeinheit empfangene D-Bit wiederspiegelt. Im aktiven Zustand beobachten die Endgeräte ständig das E-Bit und vergleichen dieses mit ihrem gesendeten D-Bit. Dasjenige Endgerät, das Identität der beiden Bits feststellt, darf weitersenden. Alle übrigen Endgeräte haben keinen Zugang zum D-Kanal bzw. müssen ihr Senden sofort abbrechen. Der D-Echo-Kanal hat eine Bitrate von 16 kbit/s und wird nur von der Netzabschlußeinheit in Richtung Endgeräte gebraucht.

## D-Kanal (D)

Der D-Kanal ist der gemeinsame Signalisierungskanal für alle Dienste. Er hat eine Bitrate von 16 kbit/s. In der Richtung zu den Endgeräten wird pro Multiplexrahmen l CMI-Bit für den D-Kanal gesendet. Dem D-Kanal-Bit folgen 25 freie Bits (X) zur beliebigen Verwertung, die zur Angleichung an den Rahmen in gehender Richtung hier eingefügt werden.

## Schmalbandkanäle kommend (B1, B2)

Danach folgen die Nutzkanäle (B1) bzw. (B2) für die Schmalbanddienste mit einer Bitrate von jeweils 64 kbit/s. In jedem Rahmen werden abwechselnd 8 bit des B1- bzw. des B2-Kanals übertragen. Dem Nutzkanal (B1) bzw. (B2) folgt ein später eingehend erläutertes Schutzzonenbit (G/S).

## Synchronisierbits für Zeilenlage und Bildbeginn (B-Sync)

Für den Breitbanddienst (BiFe oder TV) muß ein Kriterium mitübertragen werden für die Bildschirmzeilen-Nummer bzw, für den Beginn eines Halbbildes oder/und Vollbildes. Hierfür sind von der Netzabschlußeinheit in Richtung Endgeräte 10 bit reserviert. Das reicht für die Numerierung der 640 Einfachrahmen aus.

## Nutzkanal für den Breitbanddienst (BiFe/TV)

Für den Breitbanddienst (BiFe oder TV in Richtung Endgeräte) steht im Rahmen ein Zeitabschnitt mit 8640 bit zur Verfügung. Diese Bitzahl entspricht bei der oben dargestellten Bewegtbildcodierung einer Bild-

7

zeile. Von 640 gesendeten Rahmen werden für die Bildübertragung nur 625 Rahmen = 625 Zeilen gebraucht. In den restlichen 15 Rahmen stehen diese Zeitabschnitte für andere Dienste, wie bereits oben beschrieben, zur Verfügung. Das Verhältnis von 625 Rahmen für Bildübertragung zu 15 Rahmen für andere Dienste ist zeitinvariant. Die Bitrate dieses Nutzkanals beträgt 138,240 Mbit/s.

Richtung Endgeräte → Netzabschlußeinheit gehend :

D-Kanal (D)

In Gegenrichtung beginnt der Multiplexrahmen mit dem Zeitabschnitt für 1 D-Kanal-Bit (D). Er hat die Dauer von 36 CMI-Bits. In ihm werden 2 AMI-Bits mit der Momentanbitrate von ca. 7,8 Mbit/s übertragen. Sie tragen jedoch nur die Information eines D-Bits.

Vorspann (Vor)

Jede Quelle, die Nutzinformation senden will, muß erst einen Vorspann (Vor) von einigen CMI-Bits losschicken, damit sich der Empfänger in der Netzabschlußeinheit auf die neue Phasenlage der Impulse einstellen kann. Der Vorspann (Vor) hat die Bitfolge 00000001. Die CMI-codierten Nullen enthalten viel Taktinformation für das Wiedergewinnen des Taktes. Der Wechsel von 0 auf 1 signalisiert dem Empfänger den Beginn des auszuwertenden Zeitabschnitts (Abschnittssynchronisation).

Der Vorspann (Vor) ist nur notwendig, wenn mehrere Quellen an verschiedenen Stellen auf den passiven Bus zugreifen. Das ist nur in Richtung Netzabschlußeinheit der Fall. In Richtung Endgeräte kommt der gesamte Rahmen aus einer Quelle, nämlich vom Sender in der Netzabschlußeinheit, so daß der Vorspann entfällt.

Schmalbandkanäle gehend (B1, B2)

Danach folgen die Schmalbandkanäle (B1) bzw. (B2) mit je 8 bit und danach wieder ein Schutzzonenbit (G/S).

Breitbandkanal

Der Zeitabschnitt für den Breitbandkanal beginnt in gehender Richtung mit einem 8 bit langen Vorspann (Vor). Es folgen 2 bit zur Halbbild- und Vollbild-Kennzeichnung (B-Sync) und danach wie in kommender Richtung die 8640 bit für Bildfernsprechen (BiFe). Der Rahmen schließt mit dem nachfolgend erläuterten G/S-Bit.

Gleichstromausgleichs-/Schutzzonenbit (G/S)

An den Stellen im Multiplexrahmen, an denen eine Quelle aufhört zu senden und eine andere zu senden beginnt, kann eine Bitverfälschung auftreten, wenn die Impulsschwerpunkte des Signals der aufhörenden Quelle verspätet und die des Signals der beginnenden Quelle verfrüht an der Netzabschlußeinheit eintreffen (vgl. Fig. 3). Die Information des letzten Bits der aufhörenden Quelle kann dann durch Impulsüberlagerung verfälscht werden. Deshalb wird an jeder Stelle im Rahmen, an der die Zuständigkeit einer Quelle mit Bitrate 139,264 Mbit/s enden kann, ein Schutzzonenbit (G/S) eingefügt. Dies trifft für die Übertragungsrichtung von den Endgeräten zu der Netzabschlußeinheit zu. Da der in der Gegenrichtung verwendete Rahmen möglichst weitgehend gleich aufgebaut sein soll, werden auch in diesen entsprechende G/S-Bits angeordnet. Diese Bits können bei Verwendung eines Übertragungscodes, der nicht bitweise gleichstromfrei ist, als Gleichstromausgleichbits verwendet werden, wie es bei CMI-Codierung der Fall ist. Durch das G/S-Bit am Ende des Rahmens für die Richtung zu den Endgeräten wird erreicht, daß die Rahmensynchronisier- und Meldewörter stets die gleichen CMI-Impulsfolgen zeigen. Im Zeitabschnitt für den D-Kanal ist wegen der gleichstromfreien AMI-Impulsfolge kein separates Gleichstromausgleichsbit und wegen der großen Bitdauer kein Schutzzonenbit notwendig.

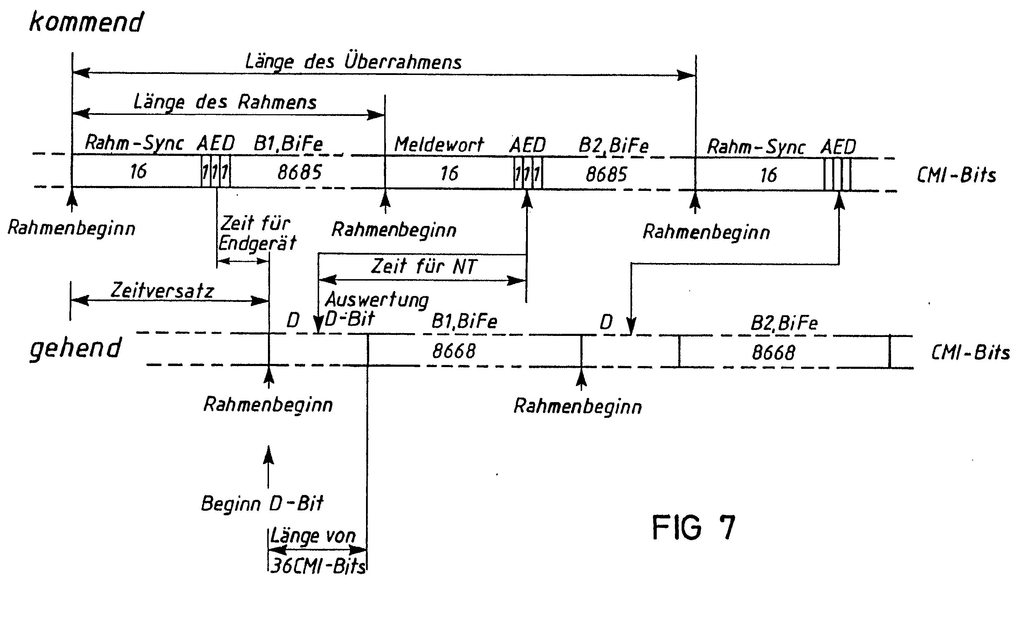

Die zeitliche Beziehung zwischen kommendem und gehendem Multiplexrahmen ist in Fig. 7 dargestellt, für den Fall, daß die bereits existierenden Schmalband-ISDN-Endgeräte nicht an den Bus anschließbar sein sollen. Der dort gezeigte zeitliche Versatz der beiden Rahmen hat folgenden Grund : das Verfahren der D-Kanal-Zugriffssteuerung setzt voraus, daß die Endgeräte vor dem Senden des nächsten Bits genügend Zeit haben für die Auswertung des D-Echo-Bits. Zum anderen muß der Empfänger in der Netzabschlußeinheit das empfangene D-Bit mit dem nächsten D-Echo-Bit (E-Bit) an die Endgeräte zurücksenden, in Fig. 7 durch die Pfeile von D nach E markiert. Diese Bedingungen werden so erfüllt, indem der Multiplexrahmen vom Endgerät zur Netzabschlußeinheit um ca. eine halbe Rahmenlänge gegenüber dem Rahmen von der Netzabschlußeinheit zum Endgerät zeitlich verschoben ist. Vom Zeitpunkt der Auswertung des empfangenen Bits bis zum Beginn des Zeitabschnitts für das nächste zu sendende E-Bit hat die Netzabschlußeinheit Zeit, um zu entscheiden, welchen logischen Zustand dieses E-Bit einnehmen muß. Der Auswertezeitpunkt für das D-Bit in Richtung Netzabschlußeinheit kann zum Beispiel in der Mitte eines AMI-Impulses liegen. Durch den Zeitversatz zwischen Hin- und Rückrahmen um etwa einen halben Rahmen sind die Entscheidungszeiten für die Netzabschlußeinheit und das Endgerät etwa gleich groß.

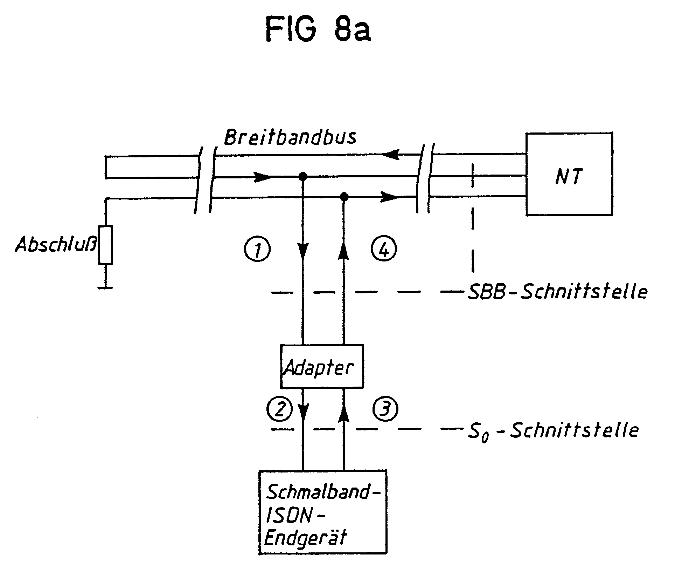

Sollen $S_0$-schnittstellenfähige Schmalband-ISDN-Endgeräte über Adapter an den Breitbandbus nach Fig. 8a anschließbar sein, dann muß auch dem Adapter Zeit für die Umsetzung der Signale eingeräumt werden. Die gesamte verfügbare Zeit muß dann auf Netzabschlußeinheit (NT), Adapter und Schmalband-ISDN-Endgerät möglichst gleichmäßig verteilt werden. In der Spezifikation der $S_0$-Schnittstelle ist bereits festgelegt, welche Antwortzeit das Endgerät haben soll. Die noch verbleibende Zeit wird, wie in Bild 8b dargestellt, etwa gleichmäßig auf Netzabschlußeinheit und Adapter aufgeteilt. Somit ergibt sich ein Zeitversatz von etwa 80% der Rahmendauer, d.h. 50 μs, um den der zur Netzabschlußeinheit gehende Rahmer gegenüber dem von der Netzabschlußeinheit kommenden verzögert ist.

Für das Konzept des Multiplexrahmens wird davon ausgegangen, daß auch die bereits existierenden Schmalband-ISDN-Endgeräte an den Breitbandbus anschließbar sein sollen. Deshalb wird für die Verschiebung der Multiplexrahmen die Zeit von 50 μs vorgeschlagen.

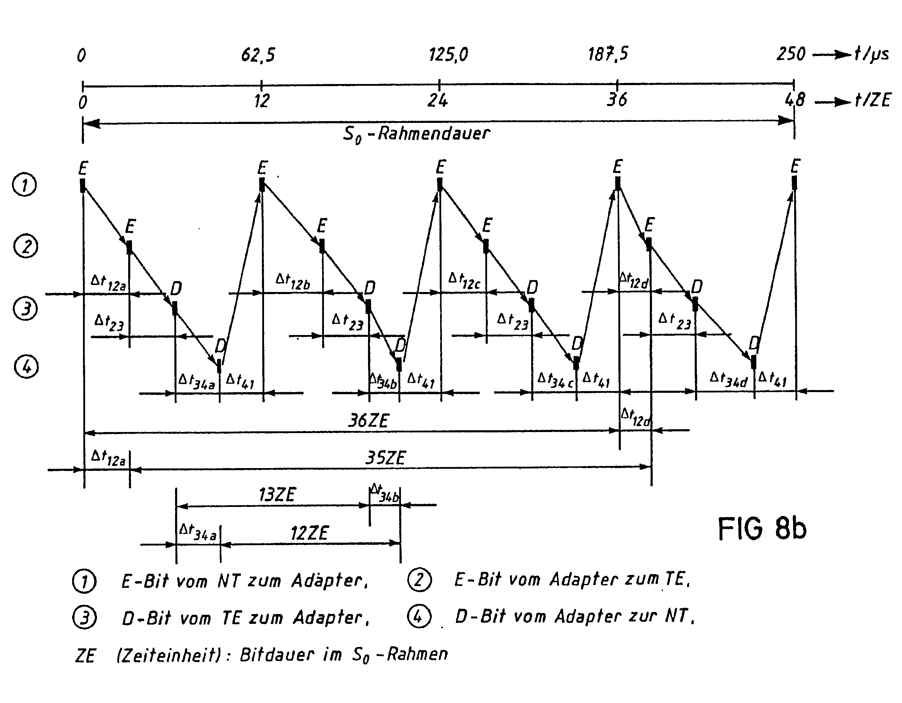

Fig. 8a gibt den Anschluß eines Schmalband-ISDN-Endgerätes über einen Adapter an den passiven Breitbandbus wieder. Der Adapter hat die Aufgabe, die Breitbandschnittstelle (SBB) in die $S_0$-Schnittstelle umzusetzen und umgekehrt. Für die zeitliche Verschiebung der Multiplexrahmen für die beiden Übertragungsrichtungen ist das Zusammenwirken der empfangenen E-Bits mit den zu sendenden D-Bits maßgebend. Dieser zeitliche Zusammenhang ist in Fig. 8b dargestellt. Hierzu sind in Fig. 8a die einzelnen Streckenabschnitte mit ① bis ④ markiert.

Die Zeitdifferenzen $\Delta tij$ und $\Delta tijk$ (i, j = 1...4, k = a...d) in Fig. 8b beinhalten die Zeit vom Beginn eines Bits am jeweiligen Empfänger bis zur Entscheidung, die Verarbeitungszeit im jeweiligen Gerät und die Signallaufzeit bis zum Empfänger des jeweils folgenden Gerätes.

Im einzelnen bedeuten :

$\Delta t12$ Zeit zwischen Eintreffen des E-Bits am Adapter und Eintreffen des E-Bits am Endgerät

$\Delta t23$ Zeit zwischen Eintreffen des E-Bits am Endgerät und Eintreffen des D-Bits am Adapter

$\Delta t34$ Zeit zwischen Eintreffen des D-Bits am Adapter und Eintreffen des D-Bits an der Netzabschlußeinheit

$\Delta t41$ Zeit zwischen Eintreffen des D-Bits an der Netzabschlußeinheit und Eintreffen des nächsten E-Bits am Adapter

Weil jeder der 250 μs langen Multiplexrahmen der $S_0$-Schnittstelle vier E- bzw. D-Bits enthält und diese nicht äquidistant sind, ist in Bild 8b der Zeitraum eines vollen $S_0$-Rahmens dargestellt, was gleichbedeutend ist mit 4 Rahmen auf dem Breitbandbus. Wegen der nicht äquidistanten Lage der E- bzw. D-Bits im $S_0$-Rahmen sind bei den Übergängen von ① nach ② und von ③ nach ④ vier Fälle zu unterscheiden, die mit a bis d indiziert sind. Maßgebend für den Zeitversatz zwischen den Rahmen ① und ② bzw. zwischen den Rahmen ③ und ④ bzw. zwischen den Rahmen ④ und ① sind die jeweils kürzesten Zeitdifferenzen, also $\Delta t12d$, $\Delta t34b$ und $\Delta t41$. Die Zeit zwischen zwei aufeinanderfolgenden E-Bits im Rahmen ① (von der Netzabschlußeinheit gesendet) ist konstant und beträgt 62,5 μs. Wie aus Fig. 8b hervorgeht, gilt :

$$\Delta t12k + \Delta t23 + \Delta t34k + \Delta t41 = 62,5 \text{ μs (für alle k)}.$$

Die Zeitdifferenz $\Delta t23$ ist durch die Spezifikation der $S_0$-Schnittstelle fest vorgegeben. Sie berechnet sich zu :

$$\Delta t23 = \frac{250 \text{ μs / Rahmen}}{48 \text{ bit / Rahmen}} \times 3 \text{ bit} = 15{,}625 \text{ μs.}$$

Wie aus Fig. 8b zu ersehen ist, gelten folgende Gleichungen :

$$\Delta t12a + \Delta t23 + \Delta t34a + \Delta t41 = 62{,}5 \text{ μs} \quad (1)$$

9

$$\Delta t12a + 35\ ZE = 36\ ZE + \Delta t12d \quad (2)$$
$$\Delta t34a + 12\ ZE = 13\ ZE + \Delta t34b \quad (3)$$
$$1\ ZE = 250\ \mu s/48 \quad (4)$$

Um den beteiligten Geräten (Netzabschlußeinheit und Adapter) etwa gleich große Verarbeitungszeiten einzuräumen, sollten die maßgebenden Zeitdifferenzen $\Delta t12d$, $\Delta t34b$ und $\Delta t41$ etwa gleich groß sein. Daher die Forderung :

$$\Delta t12d = \Delta t34b = \Delta t41 \quad (5)$$

Aus den Gleichungen (1) bis (5) erhält man :

$$\Delta t12d = \Delta t34b = \Delta t41 = 12{,}1527...\ \mu s\ . \quad (6)$$

Vernachlässigt man die Signallaufzeit von der Netzabschlußeinheit zum Adapter, dann ist $\Delta t41$ auch die Zeit vom Empfang eines D-Bits bis zum Senden eines E-Bits durch die Netzabschlußeinheit. Die Mitte des E-Bits und die Mitte des genannten D-Bits liegen etwa an der gleichen Stelle im jeweiligen Rahmen. Deshalb sollte der Zeitversatz der Rahmen etwa dem Zeitversatz der genannten Bits entsprechen ($\Delta t41$). Dieser Wert entspricht etwa einem Fünftel der Rahmendauer. D.h. der von der Netzabschlußeinheit gesendete Rahmen ist gegenüber dem empfangenen um 20% der Rahmendauer verzögert. Wegen der Periodizität der Rahmen ist dies gleichbedeutend mit einer Verzögerung des vom Endgerät bzw. Adapter gesendeten Rahmens gegenüber dem empfangenen um 80% der Rahmendauer entsprechend 50 $\mu s$.

## Ansprüche

1. Verfahren zum gleichzeitigen Betrieb mehrer Endgeräte (TE) an einer Netzabschlußeinheit (NT) eines Breitbandnetzes (ISDN-B) über eine passive Busstruktur mit zwei B-Kanälen für eine Bitrate von je 64 kbit/s und einem D-Kanal für eine Bitrate von 16 kbit/s in beiden Richtungen, **gekennzeichnet durch** folgende Merkmale :

a) für die von der Netzabschlußeinheit (NT) zu den Endgeräten (TE) kommende Richtung ist ein schleifenförmiger Bus vorgesehen, während für die von den Endgeräten (TE) zu der Netzabschlußeinheit (NT) gehende Richtung die Busleitung am Ende reflexionsarm abgeschlossen ist, wobei die von dem Bussystem abgezweigten Geräteanschlußschnüre gleiche Signallaufzeiten haben,

b) zur Zusammenfassung der von bzw. zu den Endgeräten fließenden Bitströme ist ein mit der Standardbitrate der vierten PCM-Hierarchiestufe von 139,264 Mbit/s übertragener Zeitmultiplexüberrahmen vorgesehen, welcher in beiden Richtungen aus zwei jeweils eine vollständige Bildzeile enthaltenden Rahmen mit jeweils 8704 bit besteht, worin 8 bit für die beiden abwechselnd übertragenen ISDN-Schmalbandkanäle B1 und B2 und Bits für die Rahmen- bzw. Abschnittssynchronisation (Vor) enthalten sind,

c) der Rahmen in gehender Richtung ist gegenüber dem in kommender Richtung um 80% der Rahmendauer verschoben und enthält zwischen den mit verschiedenen Phasenlagen am Empfänger der Netzabschlußeinheit (NT) eintreffenden Signalen verschiedener Quellen einen Vorspann, der aus einem Takt- und einem anschließenden Synchronisierbitmuster besteht,

d) das am Rahmenanfang vom Endgerät (TE) zur Netzabschlußeinheit (NT) gesendete D-Kanal-Signalisierungsbit ist zum Zwecke des eindeutigen Erkennens sich überlagernder Impulse von verschiedenen gleichzeitig aktiven Quellen wenigstens 10-fach gedehnt und pseudoternär codiert.

2. Verfahren nach Anspruch 1, **dadurch gekennzeichnet**, daß für das in von den Endgeräten (TE) zu der Netzabschlußeinheit (NT) gehender Richtung ausgesandte D-Kanal-Signalisierungsbit (D) am Anfang jedes der beiden Rahmen des Überrahmens eine Zeitspanne von 36 CMI-Bits derart vorgesehen wird, daß für jedes gedehnte Signalisierungsbit jeweils 2 bit der Folge + 1 − 1 oder 00 gleichstromfrei gesendet werden, während alle anderen Bits des Rahmens CMI-codiert bleiben.

3. Verfahren nach Anspruch 1 oder 2, **dadurch gekennzeichnet**, daß sowohl die Nutzinformation des Schmalbandkanals als auch die des Breitbandkanals in von den Endgeräten (TE) zu der Netzabschlußeinheit (NT) gehender Richtung durch einen aus 7 bit für den Taktphasenabgleich und 1 bit zur Abschnittssynchronisation bestehenden Vorspann (Vor) eingeleitet werden.

4. Verfahren nach Anspruch 1 bis 3, **dadurch gekennzeichnet**, daß der 8640 bit umfassenden Bildzeile des Breitbandkanals gehend in Richtung Netzabschlußeinheit 2 bit für die Bildsynchronisation (B-Sync) vorangestellt werden.

5. Verfahren nach Anspruch 1, **dadurch gekennzeichnet**, daß dem ersten Rahmen des Überrahmens in von der Netzabschlußeinheit (NT) zu den Endgeräten (TE) kommender Richtung ein 16-bit-Rahmensynchronisationswort (Rahm-Sync) und dem zweiten Rahmen ein 16-bit-Meldewort vorausgestellt wird, dem jeweils ein Aktivierungs-/Deaktivierungsbit (A), das D-Kanal-Echobit (E) und das D-Kanal-Signalisierungsbit (D) folgen, dem zum Ausgleich für den in dieser Richtung nicht benötigten Vorspann (Vor) der Gegenrichtung 25 beliebig verwendbare CMI-Bits (X) nachgestellt werden.

6. Verfahren nach Anspruch 5, **dadurch gekennzeichnet**, daß der Bildzeile in kommender Richtung 10 bit zur Bildsynchronisation (B-Sync) vorausgestellt werden.

7. Verfahren nach Anspruch 1, **dadurch gekennzeichnet**, daß die einzelnen Signalabschnitte der Rahmen in gehender und kommender Richtung jeweils mit einem Schutzzonenbit (G/S) abgeschlossen werden, welches auch zum Gleichstromausgleich verwendet werden kann.

## Claims

1. Method for the simultaneous operation of several terminal equipments (TE) on one network termination unit (NT) of a broadband network (ISDN-B) via a passive bus structure comprising two B-channels for a bit rate of 64 kbit/s each and a D-channel for a bit rate of 16 kbit/s in both directions, characterized by the following features :

a) for the direction coming from the network termination unit (NT) to the terminal equipments (TE), a loop-shaped bus is provided, whilst for the direction going from the terminal equipments (TE) to the network termination unit (NT), the bus line is terminated with low reflection at the end, the equipment connecting cords branched away from the bus system having the same signal delays,

b) for combining the bit streams flowing from and to the terminal equipments, a time-division multiplex superframe transmitting at the standard bit rate of the fourth PCM hierarchy level of 139,264 Mbit/s is provided which consists of two frames, in each case containing a complete video line, with in each case 8 704 bits, in both directions, which includes 8 bits for the two alternately transmitted ISDN narrow-band channels B1 and B2 and bits for the frame and section synchronisation (Vor),

c) the frame is displaced by 80% of the frame period in the outgoing direction compared with that in the incoming direction and contains between the signals of various sources arriving with different phase relationships at the receiver of the network termination unit (NT) a prefix which consits of a clock and a subsequent synchronising bit pattern,

d) the D-channel signalling bit sent by the terminal equipment (TE) to the network termination unit (NT) at the frame start is stretched by at least 10 times and pseudoternary coded for the purpose of unambiguous recognition of superimposed pulses from various simultaneously active sources.

2. Method according to Claim 1, characterized in that for the D-channel signalling bit (D) sent out in the outgoing direction from the terminal equipments (TE) to the network termination unit (NT), a time interval of 36 CMI bits is provided at the start of each of the two frames of the superframe in such a manner that for each stretched signalling bit in each case 2 bits of the sequence + 1 – 1 or 00 are sent without containing direct current whilst all other bits of the frame remain CMI coded.

3. Method according to Claim 1 or 2, characterized in that both the user information of the narrow-band channel and that of the broadband channel are introduced by a prefix (Vor) consisting of 7 bits for the clock phase alignment and 1 bit for section synchronisation in the outgoing direction from the terminal equipments (TE) to the network termination unit (NT).

4. Method according to Claims 1 to 3, characterized in that the video line, comprising 8640 bits, of the broadband channel is preceded by 2 bits for video synchronisation (B-Sync) going in the direction of network termination unit.

5. Method according to Claim 1, characterized in that the first frame of the superframe in the incoming direction from the network termination unit (NT) to the terminal equipments (TE) is preceded by a 16-bit frame synchronisation word (Rahm-Sync) and the second frame is preceded by a 16-bit service word which are in each case followed by an activation/deactivation bit (A), the D-channel-echo bit (E) and the D-channel signalling bit (D) which, in order to compensate for the prefix (Vor) of the opposite direction, which is not needed in this direction, is followed by 25 arbitrarily usable CMI bits (x).

6. Method according to Claim 5, characterized in that the video line is preceded by 10 bits for video synchronisation (B-Sync) in the incoming direction.

7. Method according to Claim 1, characterized in that the individual signal sections of the frames are in each case terminated in the outgoing and in the incoming direction by a guard zone bit (G/S) which can also be used for direct-current compensation.

## Revendications

1. Procédé pour faire fonctionner simultanément plusieurs terminaux (TE) raccordés à une unité de terminaison (NT) d'un réseau à large bande (ISDN-B) par l'intermédiaire d'une structure de bus passive comportant deux canaux B pour des cadences binaires respectives de 64 kbits/s et un canal D pour une cadence binaire de 16 kbits/s dans les deux sens, caractérisé par les caractéristiques suivantes :

a) pour la direction allant de l'unité de terminaison (NT) du réseau aux terminaux (TE), il est prévu un bus en forme de boucle, tandis que pour la direction partant des terminaux (TE) vers l'unité de terminaison (NT) du réseau, la ligne formant bus est terminée, au niveau de son extrémité, de manière à présenter peu de réflexions, les temps de propagation des signaux dans les fils de raccordement des terminaux, qui s'étendent en dérivation à partir du système de bus, étant identiques,

b) pour la réunion des flux binaires partant des terminaux ou arrivant à ces derniers, il est prévu une trame supérieure de multiplexage temporel transmise avec la cadence binaire standard du quatrième échelon hiérarchique MIC, égale à 139,264 Mbits/s, et constituée, dans les deux directions, par deux trames contenant respectivement une ligne d'image complète et comportant respectivement 8704 bits, parmi lesquels 8 bits sont prévus pour les deux canaux à bande étroite ISDN B1 et B2 transmis en alternance, et les bits sont prévus pour la synchronisation (Vor) des trames ou des sections,

c) la trame dans la direction de départ est décalée de 80% de sa durée par rapport à la trame arrivante et contient, entre les signaux de différentes sources, qui arrivent avec des positions de phase différentes dans le récepteur de l'unité de terminaison (NT) du réseau, une zone amorce, constituée par un profil binaire de cadence auquel succède un profil binaire de synchronisation,

d) le bit de signalisation du canal D, émis au début de la trame par le terminal (TE) en direction de l'unité de terminaison (NT) du réseau est dilaté au moins 10 fois et est codé selon un code pseudo-ternaire de manière à permettre une identification nette d'impulsions se chevauchant, qui proviennent de différentes sources actives simultanément.

2. Procédé suivant la revendication 1, caractérisé par le fait que le bit de signalisation du canal (D) émis dans la direction partant du terminal (TE) vers l'unité de terminaison (NT) du réseau, un intervalle de temps de 36 bits CMI est prévu au début de chacune des deux trames de la trame de rang supérieur, de telle sorte que pour chaque bit de signalisation dilaté, respectivement 2 bits correspondant à la séquence + 1 – 1 ou 00 sont émis sans courant continu, alors que tous les autres bits de la trame restent codés selon le codage CMI.

3. Procédé suivant la revendication 1 ou 2, caractérisé par le fait qu'aussi bien l'information utile du canal à bande étroite que celle du canal à large bande sont introduites dans une direction partant des terminaux (TE) vers l'unité de terminaison (NT) du réseau, par une zone amorce (Vor) constituée par 7 bits pour l'équilibrage des phases de cadence et 1 bit pour la synchronisation des sections.

4. Procédé suivant les revendications 1 à 3, caractérisé par le fait que 2 bits pour la synchronisation de l'image (B-Sync) sont placés en avant de la ligne d'image, qui contient 8640 bits, du canal à large bande, lors de la transmission en direction de l'unité de terminaison du réseau.

5. Procédé suivant la revendication 1, caractérisé par le fait qu'on insère, avant la première trame de la trame de rang supérieur, dans une direction partant de l'unité de terminaison (NT) du réseau vers les terminaux (TE), un mot de synchronisation de trame à 16 bits (Rahm-Sync) et qu'un mot de signalisation à 16 bits et qu'avant la seconde trame on insère un mot de signalisation à 16 bits, que suivent respectivement un bit d'activation/désactivation (K), le bit d'écho (E) du canal D et le bit de signalisation du canal D (D), en aval duquel sont placés 25 bits CMI (X) pouvant être utilisés de façon quelconque, pour compenser la zone amorce (Vor), non nécessaire dans cette direction, pour la direction opposée.

6. Procédé suivant la revendication 5, caractérisé par le fait que 10 bits servant à réaliser la synchronisation d'images (B-Sync) sont placés en avant de la ligne d'image dans la direction d'arrivée.

7. Procédé suivant la revendication 1, caractérisé par le fait que les différentes sections de signaux des trames dans la direction de départ et dans la direction d'arrivée sont terminées respectivement par un bit de zone de protection (G/S), qui peut être également utilisé pour réaliser la compensation du courant continu.

# FIG 1

EP 0 256 027 B1

Länge des Bussystems

1
Sender für Rahmen
mit Synchronwort

2
Empfänger für
Synchronwort

Synchronisation

3
Steuerung

4
Empfänger

NT

Abschluß

TE 1  · · · TEn

FIG 2

EP 0 256 027 B1

Abschnitt des Zeitmultiplexrahmens, in dem Sender m aktiv ist

Schutz-zone

Abschnitt des Zeitmultiplexrahmens, in dem Sender n aktiv ist

Taktinformation zur Bitsynchronisation

Sync-Bit

Nutzinformation von Sender n

zur Abschnittssynchronisation verwendeter 0-1-Übergang

a    1   0   0   1   1     0   0   0   0   0   0   0   1   0   1   0   0   1   0   1

b

Zeitversatz $\Delta t_m$

c

Zeitversatz $\Delta t_n$

d

e

Resultierende Schutzzone durch ungünstige Zeitversätze verkürzt

FIG 3

EP 0 256 027 B1

FIG 4

EP 0 256 027 B1

Schutzzone

Abschnitt des Zeitmultiplexrahmens für
den D-Kanal, 36 CMI-Bits breit

Schutzzone

$\Delta t_n$

a

$\Delta t_u$

b

$\Delta t_v$

c

d

breite Zone für die
sichere Auswertung

e

## FIG 5

Signale aus der Steuerungseinheit

D-Kanal-Takt

| 31 | wertdiskretes Empfangssignal | 32 | D-Kanal-Daten |

Ausgabetakt N

Empfangs-signal ▷ | 34 | wertdis-kretes Empfangs-signal | Eingabe synchron zum Empfangstakt | 35 | Empfangsdaten synchron zum Ausgabetakt N |

Aktivierung

Eingabetakt

| 33 | | 36 | Zählstart | 37 |

Empfangstakt

EP 0 256 027 B1

EP 0 256 027 B1

**a.)** NT ————————→ TE kommend

| Rahm-Sync 16 | A 1 | E 1 | D 1 | X 25 | B1 8 | G/S 1 | B-Sync 10 | BiFe/TV 8640 | G/S 1 | CMI-Bits |
| Meldewort 16 | A 1 | E 1 | D 1 | X 25 | B2 8 | G/S 1 | B-Sync 10 | BiFe/TV 8640 | G/S 1 | CMI-Bits |

←— — — — — — 2×62,5us , 2×8704 bit — — — — —→

**b.)** TE ————————→ NT gehend

←— — — — — 2×62,5us, 2×8704 bit — — — — — —→

| D 36 1 | Vor 8 – | B1 8 8 | G/S 1 – | Vor 8 – | B-Sync 2 2 | BiFe 8640 8640 | G/S 1 – | CMI-Bits Nutzbits |
| D 36 1 | Vor 8 – | B2 8 8 | G/S 1 – | Vor 8 – | B-Sync 2 2 | BiFe 8640 8640 | G/S 1 – | CMI-Bits Nutzbits |

## FIG 6

| 0 | 0 | 0 | 0 | 0 | 0 | 0 | 1 |

Taktphasenabgleich     Abschnittssynchronisation

kommend

Länge des Überrahmens

Länge des Rahmens

| Rahm-Sync | AED | B1,BiFe | Meldewort | AED | B2,BiFe | Rahm-Sync | AED | |
| 16 | 1 1 1 | 8685 | 16 | 1 1 1 | 8685 | 16 | | CMI-Bits |

Rahmenbeginn

Zeit für Endgerät

Rahmenbeginn

Rahmenbeginn

Zeit für NT

Zeitversatz

Auswertung D-Bit

gehend

| D | D-Bit | B1,BiFe | D | B2,BiFe | |
| | | 8668 | | 8668 | CMI-Bits |

Rahmenbeginn

Rahmenbeginn

Beginn D-Bit

Länge von 36CMI-Bits

FIG 7

EP 0 256 027 B1

# FIG 8a

Breitbandbus

NT

Abschluß

① ④

— SBB-Schnittstelle

Adapter

② ③

— $S_0$ -Schnittstelle

Schmalband-
ISDN-
Endgerät

0                  62,5              125,0              187,5              250 ——▶ t/µs

0                   12                 24                 36                 48 ——▶ t/ZE

$S_0$ -Rahmendauer

① E-Bit vom NT zum Adapter,        ② E-Bit vom Adapter zum TE,

③ D-Bit vom TE zum Adapter,        ④ D-Bit vom Adapter zur NT,

ZE (Zeiteinheit): Bitdauer im $S_0$ -Rahmen

FIG 8b